(19) Europäisches Patentamt
European Patent Office
Office européen des brevets

(11) EP 4 362 156 A1

(12) **EUROPEAN PATENT APPLICATION**
published in accordance with Art. 153(4) EPC

(43) Date of publication:
**01.05.2024 Bulletin 2024/18**

(21) Application number: **22891717.5**

(22) Date of filing: **12.10.2022**

(51) International Patent Classification (IPC):
***H01M 10/0525*** *(2010.01)* ***H01M 10/058*** *(2010.01)*

(52) Cooperative Patent Classification (CPC):
**H01M 4/13; H01M 10/0525; H01M 10/0567; H01M 10/058; H01M 10/42;** Y02E 60/10

(86) International application number:
**PCT/CN2022/124812**

(87) International publication number:
**WO 2023/082918 (19.05.2023 Gazette 2023/20)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **15.11.2021 CN 202111350705**

(71) Applicant: **Contemporary Amperex Technology Co., Limited**
**Ningde, Fujian 352100 (CN)**

(72) Inventors:
- **WU, Zeli**
  **Ningde, Fujian 352100 (CN)**
- **HAN, Changlong**
  **Ningde, Fujian 352100 (CN)**
- **HUANG, Lei**
  **Ningde, Fujian 352100 (CN)**
- **ZHANG, Cuiping**
  **Ningde, Fujian 352100 (CN)**

(74) Representative: **Gong, Jinping**
**CocreateIP**
**Neumarkterstr. 21**
**81673 München (DE)**

# (54) LITHIUM ION BATTERY, BATTERY MODULE, BATTERY PACK, AND ELECTRIC APPARATUS

(57) The present disclosure provides a lithium-ion battery, including a positive electrode sheet, a negative electrode sheet, a separator, and an electrolyte, wherein in the battery, a ratio of a negative electrode capacity to a positive electrode capacity is a, and the electrolyte includes thiourea compounds in an amount of b weight% based on the total weight of the electrolyte, wherein the lithium-ion battery meets the following relationship:

$$a < 1.05;$$

and

$$25 \times (1.05-a) \leq b \leq 100 \times (1.05-a).$$

Due to the presence of a specific amount of thiourea compounds in the electrolyte, the battery has a lower CB value and, at the same time, exhibits good cycle performance.

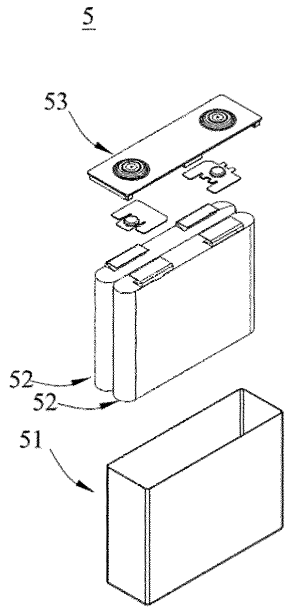


FIG. 2



Processed by Luminess, 75001 PARIS (FR)

## Description

### Technical Field

The present disclosure relates to the field of lithium-ion batteries, in particular to a lithium-ion battery with high energy density, battery module, battery pack, and electric device.

### Background Art

In recent years, with the increasingly widespread applications of lithium-ion batteries, the lithium-ion batteries have been widely used in various fields, including energy storage systems for hydropower, thermal power, wind, and solar power plants, as well as in electric tools, electric bicycles, electric motorcycles, electric vehicles, military equipment, and aerospace, etc.

In existing wound lithium-ion batteries, to address the issue of lithium precipitation at the corners, the ratio of the negative electrode capacity to the positive electrode capacity, known as the CB value (cell balance), is typically designed to be above 1.07 to ensure battery cycle performance. However, a higher CB value leads to a significant reduction in the energy density of the battery. Therefore, it is expected that the CB value of a lithium-ion battery can be lowered to increase the energy density of the battery while still ensuring that the battery has good cycle performance.

### Summary

The present disclosure is based on the above-mentioned issue with the aim of providing a lithium-ion battery that has a low CB value while maintaining good cycle performance.

To achieve this goal, a first aspect of the present disclosure provides a lithium-ion battery, which comprises a positive electrode sheet, a negative electrode sheet, a separator, and an electrolyte.

In the battery, a ratio of a negative electrode capacity to a positive electrode capacity is a, and the electrolyte comprises thiourea compounds in an amount of b weight% based on the total weight of the electrolyte. The lithium-ion battery meets the following relationship:

$$a < 1.05;$$

and

$$25 \times (1.05-a) \leq b \leq 100 \times (1.05-a).$$

Thus, in the present disclosure, by adding the amount of thiourea compounds to the electrolyte, the battery can maintain good cycle performance even when the CB value of the battery is low.

In any embodiment, a/b is in the range of 0.8 to 2, optionally in the range of 1 to 1.8. Consequently, the energy density and cycle performance of the lithium-ion battery can be further improved.

In any embodiment, a is in the range of 0.9 to less than 1.05, optionally in the range of 0.98 to 1.04. Therefore, the lithium-ion battery can achieve a better balance between cycle performance and energy density.

In any embodiment, b is in the range of 0.2 to 5, optionally in the range of 0.5 to 2, and further optionally in the range of 0.5 to 1.0. The cycle performance of the battery can be further improved by selecting the content of thiourea compounds.

In any embodiment, the thiourea compounds comprise the following structural formula:

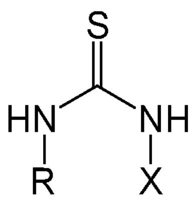,

where R and X are each independently selected from H, an alkyl of C1-C10, an alkenyl of C1-C10, a phenyl, or R and X together represent an alkylene of C1-C10 or an alkenylene of C1-C10. The alkylene of C1-C10 or alkenylene of C1-C10 is optionally substituted with an oxygroup. Optionally, R and X are each independently selected from H, an alkyl of C1-C6, an alkenyl of C1-C6, or R and X together represent an alkylene of C1-C6 or an alkenylene of C1-C6, wherein the alkylene of C1-C6 or alkenylene of C1-C6 is optionally substituted with an oxygroup.

The cycle performance of lithium-ion batteries can be further improved by the selection of thiourea compounds.

In any embodiment, the electrolyte further comprises an additive selected from at least one of the metal nitrates, a fluorinated vinyl carbonate, and a vinylene carbonate. Optionally, the metal nitrates are one or more of lithium nitrate, magnesium nitrate, and copper nitrate. Optionally, the content of the additive is in the range of 0.5 weight% to 2 weight%, based on the total mass of the electrolyte. The cycle performance of the battery can be further improved by adding the additives.

In any embodiment, within the negative electrode sheet of the lithium-ion battery, a thickness of the negative electrode film layer is $\leq$140 $\mu$m. Therefore, the cycle performance of the battery can be further improved.

A second aspect of the present disclosure provides a battery module comprising the lithium-ion battery of the first aspect of the present disclosure.

A third aspect of the present disclosure provides a battery pack comprising the battery module of the second aspect of the present disclosure.

A fourth aspect of the present disclosure provides an electric device comprising at least one selected from the lithium-ion battery of the first aspect of the present disclosure, the battery module of the second aspect of the present disclosure, or the battery pack of the third aspect of the present disclosure.

## Brief Description of Drawings

FIG. 1 is a schematic diagram of a lithium-ion battery of the embodiment of the present disclosure;

FIG. 2 is an exploded view of a lithium-ion battery of the embodiment of the present disclosure shown in FIG. 1;

FIG. 3 is a schematic diagram of a battery module of the embodiment of the present disclosure;

FIG. 4 is a schematic diagram of a battery pack of the embodiment of the present disclosure;

FIG. 5 is an exploded view of the battery pack of an embodiment of the present disclosure shown in FIG. 4; and

FIG. 6 is a schematic diagram of an electric device in which a lithium-ion battery of an embodiment of the present disclosure is used as a power source.

Reference numerals:

1 battery pack; 2 upper box body; 3 lower box body; 4 battery module; 5 lithium-ion battery; 51 shell; 52 electrode assembly; 53 top cover assembly.

## Detailed Description of Embodiments

In the following, embodiments of the lithium-ion battery, battery module, battery pack, and electrical device of the present disclosure are described in detail with appropriate reference to the drawings. However, there may be cases in which unnecessarily detailed descriptions are omitted. For example, there are cases in which detailed descriptions of matters are already well-known, and repetitive descriptions of practically the same structure are omitted. This is to prevent the following description from becoming unnecessarily lengthy and to facilitate understanding by those skilled in the art. Furthermore, the drawings and the following description are provided for the purpose of fully understanding the present disclosure by those skilled in the art and are not intended to limit the theme recorded in the claims.

The "scope" disclosed in the present disclosure is defined in the form of a lower limit and an upper limit. A given scope is defined by selecting a lower limit and an upper limit, wherein the selected lower limit and upper limit define the boundaries of the particular scope. The ranges defined in this manner can include or exclude end values and can be combined in any way, which means that any lower limit can be combined with any upper limit to form a range. For example, if ranges of 60-120 and 80-110 are listed for a particular parameter, it is understood that ranges of 60-110 and 80-120 are also expected. In addition, if minimum range values 1 and 2 are listed, and if maximum range values 3, 4,

and 5 are listed, the following ranges can all be expected 1-3, 1-4, 1-5, 2-3, 2-4, and 2-5. In the present disclosure, unless otherwise indicated, the value range "a-b" denotes an abbreviated representation of any combination of real numbers between a and b, where both a and b are real numbers. For example, the value range "0-5" represents that the context has been listed in all the real numbers between "0-5", and "0-5" is just an abbreviated representation of the combination of these values. Further, when expressing that a parameter is an integer $\geq 2$, it is equivalent to disclosing that the parameter is, for example, an integer 2, 3, 4, 5, 6, 7, 8, 9, 10, 11, 12, and the like.

All embodiments of the present disclosure, as well as optional embodiments, can be combined with each other to form new technical solutions, if not specifically stated.

All technical features of the present disclosure, as well as technical features, can be combined with each other to form new technical solutions, if not specifically stated.

If not otherwise specified, all steps of the present disclosure can be performed sequentially or randomly, preferably sequentially. For example, the method comprises steps (a) and (b), indicating that the method can comprise steps (a) and (b) performed sequentially or can comprise steps (b) and (a) performed sequentially. For example, the mentioned method can also include step (c), indicating that step (c) can be added to the method in any order. For example, the method can include steps (a), (b), and (c), or it can include steps (a), (c), and (b), or it can include steps (c), (a), and (b), and so on.

Unless otherwise specified, references to "include" and "comprise" in the present disclosure are open-ended and can be closed-ended. For example, the terms "include" and "comprise" can indicate that other components not listed can also be included or comprised, or that only the listed components can be included or comprised.

If not otherwise specified, the term "or" is included in the present disclosure. For example, the phrase "A or B" means "A, B, or both A and B". More specifically, the condition "A or B" is satisfied by any of the following: A is true (or exists) and B is false (or does not exist); A is false (or does not exist) and B is true (or exists), or both A and B are true (or exist).

Existing lithium-ion batteries have high negative electrode capacity/positive electrode capacity, i.e., CB (cell balance) values, which are usually above 1.07, and some of which are even above 1.1. A higher CB value means that the negative electrode capacity is more than the positive electrode capacity, which can provide enough space for lithium during charging and discharging, thus avoiding lithium deposition on the surface of the negative electrode to form dendrites. Therefore, the battery has a better cycle performance. However, a higher CB value also means that the negative electrode is wasted, resulting in a lower energy density of the battery. Therefore, it is expected that the CB value of a lithium-ion battery can be lowered to increase the energy density of the battery while still ensuring that the battery has good cycle performance.

In the present disclosure, by adding a specific amount of thiourea compounds to the electrolyte of a lithium-ion battery, a lithium-ion battery having a lower CB value than existing lithium-ion batteries is obtained, and the lithium-ion battery has a good cycle performance.

In one embodiment of the present disclosure, the present disclosure provides a lithium-ion battery, which comprises a positive electrode sheet, a negative electrode sheet, a separator, and an electrolyte. In the battery, a ratio of a negative electrode capacity to a positive electrode capacity is a, and the electrolyte comprises thiourea compounds in an amount of b weight% based on the total weight of the electrolyte. The lithium-ion battery meets the following relationship:

$$a < 1.05;$$

and

$$25 \times (1.05\text{-}a) \leq b \leq 100 \times (1.05\text{-}a).$$

Although the mechanism is not clear, the present applicant has unexpectedly discovered that, in the present disclosure, by adding the mentioned amount of thiourea compounds to the electrolyte, the battery can maintain good cycle performance even when the CB value of the battery is low. If the content of thiourea compounds is too low, the improvement in cycle performance is insufficient; if the content is too high, it can also lead to gas production in the battery during storage due to oxidized thiourea. The lithium-ion battery designed above has both good cycle performance and energy density.

The negative electrode capacity and the positive electrode capacity of the battery can each be detected by the following method: disassembling the battery to obtain, respectively, the positive and negative electrode sheets after fully

discharging the lithium-ion battery (e.g., for the lithium-ion battery of the present disclosure, discharging the battery to 2.5 V is to realize the full discharge); assembling into a button cell by using a lithium metal for each of the positive and negative electrode sheets as a counter electrode; and carrying out the capacity discharge at 0.1 mA to test the corresponding capacity. A detailed CB value testing process is described in the test method section of the embodiments of the present disclosure.

In some embodiment, a/b is in the range of 0.8 to 2, optionally in the range of 1 to 1.8. Consequently, the energy density and cycle performance of the lithium-ion battery can be further improved.

In some embodiment, a is in the range of 0.9 to less than 1.05, optionally in the range of 0.98 to 1.04. Therefore, the lithium-ion battery can achieve a better balance between cycle performance and energy density.

In some embodiment, b is in the range of 0.2 to 5, optionally in the range of 0.5 to 2, and further optionally in the range of 0.5 to 1.0. The cycle performance of the battery can be further improved by selecting the content of thiourea compounds.

In some embodiment, the thiourea compounds have the following structural formula:

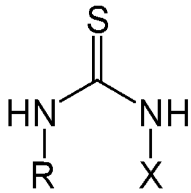,

where R and X are each independently selected from H, an alkyl of C1-C10, an alkenyl of C1-C10, a phenyl, or R and X together represent an alkylene of C1-C10 or an alkenylene of C1-C10. The alkylene of C1-C10 or alkenylene of C1-C10 is optionally substituted with an oxygroup. Optionally, R and X are each independently selected from H, an alkyl of C1-C6, an alkenyl of C1-C6, or R and X together represent an alkylene of C1-C6 or an alkenylene of C1-C6, wherein the alkylene of C1-C6 or alkenylene of C1-C6 is optionally substituted with an oxygroup. Optionally, the thiourea compounds comprise one of the following structures:

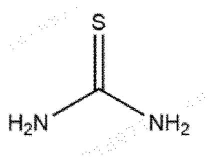, 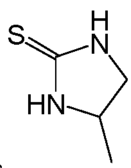, 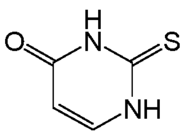, 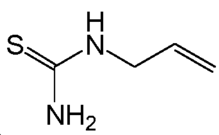, and 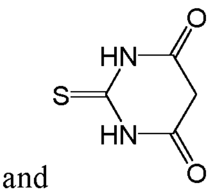.

The cycle performance of lithium-ion batteries can be further improved by the selection of thiourea compounds.

In some embodiment, the electrolyte further comprises an additive selected from at least one of the metal nitrates, a fluorinated vinyl carbonate, and a vinylene carbonate. Optionally, the metal nitrates are one or more of lithium nitrate, magnesium nitrate, and copper nitrate. Optionally, the content of the additive is in the range of 0.5 weight% to 2 weight%. The cycle performance of the battery can be further improved by adding the additives.

In some embodiments, within the negative electrode sheet of the lithium-ion battery, a thickness of the negative electrode film layer is ≤140 micrometers. Therefore, the cycle performance of the battery can be further improved.

In the following, the lithium-ion battery, battery module, battery pack, and electric device of the present disclosure are described in detail with appropriate reference to the drawings.

In one embodiment of the present disclosure, a lithium-ion battery is provided.

Typically, a lithium-ion battery comprises a positive electrode sheet, a negative electrode sheet, an electrolyte, and a separator. During the process of battery charging and discharging, active ions are embedded and dislodged back and forth between the positive electrode sheet and the negative electrode sheet. The electrolyte serves as a conductor of ions between the positive electrode sheet and the negative electrode sheet. The separator is arranged between the positive electrode sheet and the negative electrode sheet, which mainly plays a role in preventing the positive and negative electrodes from short circuit, as well as allowing the ions to pass through at the same time.

[Positive electrode sheet]

The positive electrode sheet comprises a positive current collector and a positive film layer provided on at least one surface of the positive current collector, wherein the positive electrode film layer comprises a positive electrode

active material of the first aspect of the present disclosure.

As an example, the positive current collector comprises two surfaces opposite each other in the direction of its own thickness, and the positive electrode film layer is provided on either or both of the two opposite surfaces of the positive current collector.

In some embodiments, the positive current collector can be a metal foil or a composite current collector. For example, as a metal foil, aluminum foil can be applied. The composite current collector can comprise a base layer of polymeric material and a metal layer formed on at least one surface of the base layer of polymeric material. The composite current collector can be formed by forming metallic materials (aluminum, aluminum alloys, nickel, nickel alloys, titanium, titanium alloys, silver and silver alloys, etc.) onto a base material of polymeric material (e.g., substrates of polypropylene (PP), polyethylene terephthalate (PET), polybutylene terephthalate (PBT), polystyrene (PS), polyethylene (PE), etc.).

In some embodiments, the positive electrode active material can be a positive electrode active material known in the art for use in batteries. As an example, the positive electrode active material can comprise at least one of the following materials: a lithium-containing phosphate with an olivine structure, a lithium transition metal oxide, and respective modified compounds thereof. However, the present disclosure is not limited to these materials, and other conventional materials that can be utilized as positive electrode active material for battery can also be used. These positive electrode active materials can be used in only one alone or in a combination of more than two. The examples of the lithium transition metal oxides can comprise, but are not limited to, lithium cobalt oxides (e.g., $LiCoO_2$), lithium nickel oxides (e.g., $LiNiO_2$), lithium manganese oxides (e.g., $LiMnO_2$ $LiMn_2O_4$), lithium nickel cobalt oxides, lithium manganese cobalt oxides, lithium nickel manganese oxides, lithium nickel cobalt manganese oxides (e.g., $LiNi_{1/3}Co_{1/3}Mn_{1/3}O_2$, also referred to as $NCM_{333}$; $LiNi_{0.5}Co_{0.2}Mn_{0.3}O_2$, also referred to as $NCM_{523}$; $LiNi_{0.5}Co_{0.25}Mn_{0.25}O_2$, also referred to as $NCM_{211}$; $LiNi_{0.6}Co_{0.2}Mn_{0.2}O_2$, also referred to as $NCM_{622}$; $LiNi_{0.8}Co_{0.1}Mn_{0.1}O_2$, also referred to as $NCM_{811}$); lithium-nickel-cobalt-aluminum oxides (e.g., $LiNi_{0.85}Co_{0.15}Al_{0.05}O_2$), and modified compounds thereof, and the like. The examples of lithium-containing phosphate with an olivine structure can comprise but are not limited to, at least one of lithium iron phosphate (e.g., $LiFePO_4$, also referred to as LFP), a composite material of lithium iron phosphate and carbon, lithium manganese phosphate (e.g., $LiMnPO_4$), a composite material of lithium manganese phosphate and carbon, lithium ferromanganese phosphate, and a composite material of lithium ferromanganese phosphate and carbon.

In some embodiments, the positive electrode film layer also optionally comprises a binder. As an example, the binder can comprise at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin.

In some embodiments, the positive electrode film layer also optionally comprises a conductive agent. As an example, the conductive agent can comprise at least one of superconducting carbon, acetylene black, carbon black, Ketjen black, carbon dots, carbon nanotubes, graphene, and carbon nanofibers.

In some embodiments, the positive electrode sheet can be prepared by dispersing the above-described components for preparing the positive electrode sheet, such as the positive electrode active material, the conductive agent, the binder, and any other components, in a solvent (e.g., N-methylpyrrolidone) to form a positive electrode slurry; coating the positive electrode slurry on the positive current collector; and then obtaining the positive electrode sheet after the process such as drying, cold pressing, and the like.

[Negative electrode sheet]

The negative electrode sheet comprises a negative current collector and a negative electrode film layer provided on at least one surface of the negative current collector, wherein the negative electrode film layer comprises a negative electrode active material.

As an example, the negative current collector comprises two surfaces opposite each other in the direction of its own thickness, and the negative electrode film layer is provided on either or both of the two opposite surfaces of the negative current collector.

In some embodiments, the negative current collector can be a metal foil or a composite current collector. For example, as a metal foil, copper foil can be applied. The composite current collector can comprise a base layer of polymeric material and a metal layer formed on at least one surface of the base material of polymeric material. The composite current collector can be formed by forming metallic materials (copper, copper alloys, nickel, nickel alloys, titanium, titanium alloys, silver and silver alloys, etc.) onto a base material of polymeric material (e.g., substrates of polypropylene (PP), polyethylene terephthalate (PET), polybutylene terephthalate (PBT), polystyrene (PS), polyethylene (PE), etc.).

In some embodiments, the negative electrode active material can be a negative electrode active material known in the art for use in batteries. As an example, the negative electrode active material can comprise at least one of the following materials: artificial graphite, natural graphite, soft carbon, hard carbon, silicon-based materials, tin-based materials, and lithium titanate, among others. The silicon-based materials can be selected from at least one of elemental

silicon, silicon-oxygen compounds, silicon-carbon composites, silicon-nitrogen composites, and silicon alloys. The tin-based materials can be chosen from at least one of elemental tin, tin-oxygen compounds, and tin alloys. However, the present disclosure is not limited to these materials, and other conventional materials that can be utilized as negative electrode active material for battery cathodes can also be used. These negative electrode active materials can be used in only one alone or in a combination of more than two.

In some embodiments, the negative electrode film layer further optionally comprises a binder. The binder can be selected from at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer also optionally comprises a conductive agent. The conductive agent can be selected from at least one of superconducting carbon, acetylene black, carbon black, Ketjen black, carbon dots, carbon nanotubes, graphene, and carbon nanofibers.

In some embodiments, the negative electrode film layer can optionally comprise other additives such as thickeners, for example, carboxymethyl cellulose sodium (CMC-Na), among others.

In some embodiments, the negative electrode sheet can be prepared by dispersing the above-described components for the negative electrode sheet, such as the negative electrode active material, the conductive agent, the binder, and any other components, in a solvent (e.g., deionized water) to form a negative electrode slurry; coating the negative electrode slurry on the negative current collector; and then obtaining the negative electrode sheet after the process such as drying, cold pressing, and the like.

[Electrolyte]

The electrolyte is located between the positive electrode piece and the negative electrode plate and functions to conduct ions. In the present application, the type of the electrolyte is not specifically limited and can be selected according to requirements. For example, the electrolyte may be in a liquid, gel or all-solid state.

In some embodiments, as the electrolyte, an electrolyte solution is used. The electrolyte solution comprises an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bis(fluorosulfonimide), lithium bis(trifluoromethane)sulfonimide, lithium triflate, lithium difluorophosphate, lithium difluoro(oxalato)borate, lithium bis(oxalato)borate, lithium difluoro bis(oxalato)phosphate and lithium tetrafluoro(oxalato)phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, methyl sulfonyl methane, ethyl methyl sulfone, and ethyl sulfonyl ethane.

In some embodiments, the electrolyte solution further optionally comprises additives. For example, the additives may include negative electrode film-forming additives and positive electrode film-forming additives, and may also include additives that can improve certain properties of a battery, such as additives that improve the overcharge performance of a battery, additives that improve the high-temperature or low-temperature performance of a battery, etc.

[Separator]

In some embodiments, lithium-ion batteries further comprise separators. In the present disclosure, the type of the separator is not particularly limited and can be selected from any well-known porous structure separator having good chemical stability and mechanical stability.

In some embodiments, the material of the separator can be selected from at least one of glass fibers, a non-woven fabric, polyethylene, polypropylene, and polyvinylidene fluoride. The separator may be a single-layer thin film or may also be a multi-layer composite thin film and is not particularly limited. When the separator is a multi-layer composite thin film, the material of each layer may be the same or different and is not particularly limited.

In some embodiments, the positive electrode piece, the negative electrode piece and the separator can be manufactured into an electrode assembly by means of a winding process or a lamination process.

In some embodiments, the lithium-ion battery may include an outer package. The outer package can be used for encapsulating the above-mentioned electrode assembly and electrolyte.

In some embodiments, the outer package of the lithium-ion battery may be a hard shell, such as a hard plastic shell, an aluminum shell, and a steel shell. The outer package of the lithium-ion battery may also be a soft package, such as a pouch-type soft package. The material of the soft package may be plastic, and as the plastic, polypropylene, polybutylene terephthalate, polybutylene succinate, etc., may be listed by way of example.

In the present application, the shape of the lithium-ion battery is not particularly limited and may be cylindrical, square or any other shape. For example, FIG. 1 is an exemplary lithium-ion battery 5 with a square structure.

In some embodiments, referring to FIG. 2, the outer package may include a housing 51 and a cover plate 53, wherein the housing 51 can include a bottom plate and side plates connected to the bottom plate, and the bottom plate and the side plate enclose to form an accommodating cavity. The housing 51 has an opening in communication with the accommodating cavity, and the cover plate 53 can cover the opening to close the accommodating cavity. The positive electrode piece, the negative electrode piece and the separator can be subjected to a winding process or a lamination process to form an electrode assembly 52. The electrode assembly 52 is encapsulated in the accommodating cavity. The electrolyte solution infiltrates the electrode assembly 52. The number of the electrode assemblies 52 contained in the lithium-ion battery 5 may be one or more, and may be selected by those skilled in the art according to actual requirements.

In some embodiments, the lithium-ion battery can be assembled into a battery module, and the number of the secondary batteries contained in the battery module can be one or more, and the specific number can be selected by those skilled in the art according to the application and capacity of the battery module.

FIG. 3 is an exemplary battery module 4. Referring to FIG. 3, in the battery module 4, a plurality of secondary batteries 5 may be disposed sequentially in the length direction of the battery module 4. Apparently, the secondary batteries can also be disposed in any other manner. Furthermore, the plurality of secondary batteries 5 can be fixed with fasteners.

Optionally, the battery module 4 may further comprise a shell having an accommodating space in which the plurality of secondary batteries 5 are accommodated.

In some embodiments, the above-mentioned battery module may also be assembled into a battery pack, the number of battery modules included in the battery pack may be one or more, and the specific number can be selected by those skilled in the art according to the application and capacity of the battery pack.

FIGS. 4 and 5 show an exemplary battery pack 1. Referring to FIGS. 4 and 5, the battery pack 1 may comprise a battery casing and a plurality of battery modules 4 arranged in the battery casing. The battery casing comprises an upper casing body 2 and a lower casing body 3, wherein the upper casing body 2 can cover the lower casing body 3 and form a closed space for accommodating the battery module 4. The plurality of battery modules 4 may be arranged in the battery casing in any manner.

In addition, the present application further provides an electric device. The electric device comprises at least one of the lithium-ion battery, battery module, or battery pack provided by the present application. The lithium-ion battery, battery module or battery pack may be used either as a power source of the electric device or as an energy storage unit for the electric device. The powered device can include, but is not limited to, a mobile device (such as a mobile phone and a laptop), an electric vehicle (such as an all-electric vehicle, a hybrid electric vehicle, a plug-in hybrid electric vehicle, an electric bicycle, an electric scooter, an electric golf cart, and an electric truck), an electric train, a ship, a satellite, an energy storage system, etc.

For the powered device, the lithium-ion battery, battery module or battery pack can be selected according to the usage requirements thereof.

FIG. 6 is an exemplary powered device. The powered device is an all-electric vehicle, a hybrid electric vehicle, or a plug-in hybrid electric vehicle, etc. In order to meet the high power and high energy density requirements of the lithium-ion battery for the powered device, a battery pack or a battery module can be used.

As another example, the powered device may be a mobile phone, a tablet computer, a laptop, etc. The device is generally required to be thin and light, and a lithium-ion battery can be used as a power source.

Examples

The embodiments of the present disclosure are implemented as follows. The embodiments described below are exemplary and are intended only to explain the present disclosure and are not to be construed as a limitation of the present disclosure. In cases where specific technical details or conditions are not specified in the embodiments, the techniques or conditions described in the literature within the present field or in accordance with the product specifications shall be applied. Reagents or instruments not specified by a manufacturer are conventional products that can be commercially obtained.

The thiourea additives used in Examples and Comparative Examples are as follows.

| Serial number of thiourea compounds | Structural formula |
|---|---|
| 1 | 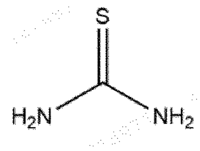 |
| 2 | 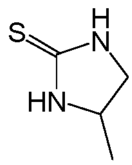 |
| 3 | 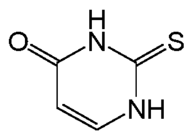 |
| 4 | 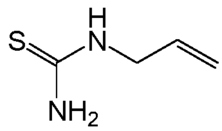 |
| 5 | 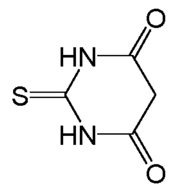 |

**Comparative Example 1**

[Preparation of electrolyte]

In an argon gas atmosphere glovebox with a water content less than 10 ppm, 26.25g of EC (ethylene carbonate), 61.25g of EMC (ethyl methyl carbonate), and 12.5g of $LiPF_6$ were separately added to a beaker. After thorough stirring and dissolution, the electrolyte of the comparative example was obtained.

[Preparation of positive electrode sheet]

The positive electrode active material, ternary nickel cobalt manganese material ($LiNi_{0.8}Co_{0.1}Mn_{0.1}O_2$, with a capacity of 180 mAh/g), the binder polyvinylidene fluoride, and the conductive agent acetylene black were mixed in a mass ratio of 8: 1: 1. By adding the solvent NMP (N-methylpyrrolidone), a positive electrode slurry was obtained under the action of a vacuum stirrer. The positive electrode slurry was uniformly coated at 0.2826 g (dry weight)/1540.25 $mm^2$ onto the positive current collector aluminum foil with a thickness of 13 $\mu$m. After air drying the aluminum foil at room temperature, it was transferred to a 120°C oven for 1 h. After cold pressing and cutting, the positive electrode sheet was obtained.

[Preparation of negative electrode sheet]

Artificial graphite (with a capacity of 350 mAh/g), conductive agent carbon black, and binder acrylic acid ester were mixed in a mass ratio of 92: 2: 6. By adding deionized water, a negative electrode slurry was obtained under the action of a vacuum stirrer. The negative electrode slurry was uniformly coated at 0.1290g (dry weight)/1540.25 $mm^2$ onto the negative current collector copper foil with a thickness of 8$\mu$m. After air drying the copper foil at room temperature, it was transferred to a 120°C oven for 1 h. After cold pressing to achieve a thickness of 100 micrometers of the negative electrode film layer, the negative electrode sheet was obtained by cutting.

[Separator]

The separator was purchased from the Cellgard company, with model cellgard2400.

[Preparation of lithium-ion battery]

The positive electrode sheet, separator, and negative electrode sheet were stacked in order so that the separator served as an insulator between the positive and negative electrode sheets, and then by wounding a bare core was formed. The bare core was arranged in the external packaging foil, and the previously prepared 8.6 g of electrolyte was injected into the dried battery. After vacuum sealing, resting, formation, and shaping processes, a lithium-ion battery was obtained.

**Comparative Example 2**

The preparation process for the lithium-ion battery was essentially the same as in the Comparative Example 1. The difference was that the electrolyte was prepared by the following step. In an argon gas atmosphere glovebox with a water content less than 10 ppm, 26.1g of EC, 60.9g of EMC, 12.5g of $LiPF_6$, and 0.5g of thiourea compound 1 were separately added to a beaker. After thorough stirring and dissolution, the electrolyte of the comparative example was obtained.

**Comparative Example 3**

The preparation process for the lithium-ion battery was essentially the same as in the Comparative Example 1. The difference was that the electrolyte was prepared by the following step. In an argon gas atmosphere glovebox with a water content less than 10 ppm, 25.29 g of EC, 59.01 g of EMC, 12.5g of $LiPF_6$, and 3.2 g of thiourea compound 1 were separately added to a beaker. After thorough stirring and dissolution, the electrolyte of the comparative example was obtained.

**Example 1**

The preparation process for the lithium-ion battery was essentially the same as in the Comparative Example 1. The difference was that the electrolyte was prepared by the following step. In an argon gas atmosphere glovebox with a water content less than 10 ppm, 25.95 g of EC, 60.55 g of EMC, 12.5 g of $LiPF_6$, and 1 g of thiourea compound 1 were separately added to a beaker. After thorough stirring and dissolution, the electrolyte of the example was obtained.

**Example 2**

The preparation process for the lithium-ion battery was essentially the same as in the Comparative Example 1. The difference was that the electrolyte was prepared by the following step. In an argon gas atmosphere glovebox with a water content less than 10 ppm, 26.01 g of EC, 60.69 g of EMC, 12.5 g of $LiPF_6$, and 0.8 g of thiourea compound 1 were separately added to a beaker. After thorough stirring and dissolution, the electrolyte of the example was obtained.

**Example 3**

The preparation process for the lithium-ion battery was essentially the same as in the Comparative Example 1. The difference was that the electrolyte was prepared by the following step. In an argon gas atmosphere glovebox with a water content less than 10 ppm, 25.8 g of EC, 60.2 g of EMC, 12.5 g of $LiPF_6$, and 1.5 g of thiourea compound 1 were separately added to a beaker. After thorough stirring and dissolution, the electrolyte of the example was obtained.

**Example 4**

The preparation process for the lithium-ion battery was essentially the same as in the Comparative Example 1. The difference was that the electrolyte was prepared by the following step. In an argon gas atmosphere glovebox with a water content less than 10 ppm, 25.9 g of EC, 60.4 g of EMC, 12.5 g of $LiPF_6$, and 1.2 g of thiourea compound 1 were separately added to a beaker. After thorough stirring and dissolution, the electrolyte of the example was obtained.

**Example 5**

The preparation process for the lithium-ion battery was essentially the same as in Comparative Example 1. The difference was that the negative electrode slurry was uniformly coated at 0.1315 g (dry weight)/1540.25 $mm^2$ onto the negative current collector copper foil with a thickness of 8 μm. The electrolyte was prepared in the following steps. In an argon gas atmosphere glovebox with a water content less than 10 ppm, 26.07 g of EC, 60.83 g of EMC, 12.5 g of $LiPF_6$, and 0.6 g of thiourea compound 1 were separately added to a beaker. After thorough stirring and dissolution, the electrolyte of the example was obtained.

**Example 6**

The preparation process for the lithium-ion battery was essentially the same as in Comparative Example 1. The difference was that the negative electrode slurry was uniformly coated at 0.1315 g (dry weight)/1540.25 $mm^2$ onto the negative current collector copper foil with a thickness of 8 μm. The electrolyte was prepared in the following steps. In an argon gas atmosphere glovebox with a water content less than 10 ppm, 26.085 g of EC, 60.865 g of EMC, 12.5 g of $LiPF_6$, and 0.55 g of thiourea compound 1 were separately added to a beaker. After thorough stirring and dissolution, the electrolyte of the example was obtained.

**Example 7**

The preparation process for the lithium-ion battery was essentially the same as in Comparative Example 1. The difference was that the negative electrode slurry was uniformly coated at 0.1315 g (dry weight)/1540.25 $mm^2$ onto the negative current collector copper foil with a thickness of 8 μm. The electrolyte was prepared in the following steps. In an argon gas atmosphere glovebox with a water content less than 10 ppm, 26.1 g of EC, 60.9 g of EMC, 12.5 g of $LiPF_6$, and 0.5 g of thiourea compound 1 were separately added to a beaker. After thorough stirring and dissolution, the electrolyte of the comparative example was obtained.

**Example 8**

The preparation process for the lithium-ion battery was essentially the same as in Comparative Example 1. The difference was that the negative electrode slurry was uniformly coated at 0.1239 g (dry weight)/1540.25 $mm^2$ onto the negative current collector copper foil with a thickness of 8 μm. The electrolyte was prepared in the following steps. In an argon gas atmosphere glovebox with a water content less than 10 ppm, 25.65 g of EC, 59.85 g of EMC, 12.5 g of $LiPF_6$, and 2 g of thiourea compound 1 were separately added to a beaker. After thorough stirring and dissolution, the electrolyte of the example was obtained.

**Example 9**

The preparation process for the lithium-ion battery was essentially the same as in Comparative Example 1. The difference was that the negative electrode slurry was uniformly coated at 0.115 g (dry weight)/1540.25 $mm^2$ onto the negative current collector copper foil with a thickness of 8 μm. The electrolyte was prepared in the following steps. In an argon gas atmosphere glovebox with a water content less than 10 ppm, 25.05 g of EC, 58.45 g of EMC, 12.5 g of $LiPF_6$, and 4 g of thiourea compound 1 were separately added to a beaker. After thorough stirring and dissolution, the electrolyte of the example was obtained.

**Example 10**

The preparation process for the lithium-ion battery was essentially the same as in the Example 1. The difference was that the thiourea compounds added to the preparation of electrolyte in the example were thiourea compound 2.

**Example 11**

The preparation process for the lithium-ion battery was essentially the same as in the Example 1. The difference was that the thiourea compounds added to the preparation of electrolyte in the example were thiourea compound 3.

**Example 12**

The preparation process for the lithium-ion battery was essentially the same as in the Example 1. The difference

was that the thiourea compounds added to the preparation of electrolyte in the example were thiourea compound 4.

**Example 13**

The preparation process for the lithium-ion battery was essentially the same as in the Example 1. The difference was that the thiourea compounds added to the preparation of electrolyte in the example were thiourea compound 5.

**Example 14**

The preparation process for the lithium-ion battery was essentially the same as in Example 1. The difference was that the electrolyte was prepared by the following step.

In an argon gas atmosphere glovebox with a water content less than 10 ppm, 25.35 g of EC, 59.15 g of EMC, 12.5 g of $LiPF_6$, 1 g of thiourea compound 1, 1 g of FEC (fluorinated vinyl carbonate), and 1 g of LiNOs were separately added to a beaker. After thorough stirring and dissolution, the electrolyte of the example was obtained.

**Example 15**

The preparation process for the lithium-ion battery was essentially the same as in Example 1. The difference was that the electrolyte was prepared by the following step.

In an argon gas atmosphere glovebox with a water content less than 10 ppm, 25.35 g of EC, 59.15g of EMC, 12.5 g of $LiPF_6$, 1 g of thiourea compound 1, 1 g of FEC, and 1 g of $Mg(NO_3)_2$ were separately added to a beaker. After thorough stirring and dissolution, the electrolyte of the example was obtained.

**Example 16**

The preparation process for the lithium-ion battery was essentially the same as in Example 1. The difference was that the electrolyte was prepared by the following step.

In an argon gas atmosphere glovebox with a water content less than 10 ppm, 25.35 g of EC, 59.15 g of EMC, 12.5 g of $LiPF_6$, 1 g of thiourea compound 1, 1 g of VC (vinylene carbonate), and 1 g of LiNOs were separately added to a beaker. After thorough stirring and dissolution, the electrolyte of the example was obtained.

**Example 17**

The preparation process for the lithium-ion battery was essentially the same as in Example 1. The difference was that the electrolyte was prepared by the following step.

In an argon gas atmosphere glovebox with a water content less than 10 ppm, 25.35 g of EC, 59.15g of EMC, 12.5 g of $LiPF_6$, 1 g of thiourea compound 1, 2 g of LiNOs were separately added to a beaker. After thorough stirring and dissolution, the electrolyte of the example was obtained.

**Example 18**

The preparation process for the lithium-ion battery was essentially the same as in Example 1. The difference was that the thickness of the negative electrode film layer after cold pressing was 90 micrometers.

**Example 19**

The preparation process for the lithium-ion battery was essentially the same as in Example 1. The difference was that the thickness of the negative electrode film layer after cold pressing was 140 micrometers.

**Example 20**

The preparation process for the lithium-ion battery was essentially the same as in Example 1. The difference was that the thickness of the negative electrode film layer after cold pressing was 150 micrometers.

**Test Example**

1. CB value measurement

After the lithium-ion battery was discharged to 2.5 V, the battery was disassembled to obtain the negative electrode sheet. Lithium metal was used as a counter electrode for the negative electrode sheet to assemble a button-type cell. A standard 2046-button-cell metal casing was adopted for the button-type cell. The electrode sheet was trimmed into small round pieces with a diameter of 14 mm, the lithium metal sheet was made of a small round piece with a diameter of 16 mm, and the separator in the center was made of a PP separator with a diameter of 18 mm. For the aforementioned button cell, a discharge was performed at 36 mA until 0.05 V was reached. At this point, the discharge capacity was recorded as N1.

Once the lithium-ion battery was charged to 4.4 V to achieve full charge, the battery was disassembled to obtain the positive electrode sheet. Lithium metal was used as a counter electrode for the positive electrode sheet to assemble a button-type cell. A standard 2046-button-cell metal casing was adopted for the button-type cell. The electrode sheet was trimmed into small round pieces with a diameter of 14 mm, the lithium metal sheet was made of a small round piece with a diameter of 16 mm, and the separator in the center was made of a PP separator with a diameter of 18 mm. For the aforementioned button cell, a discharge was performed at 18 mA until 3.0 V was reached. At this point, the discharge capacity was recorded as N2.

Therefore, the CB value of the lithium-ion battery was determined to be CB = N1/N2.

2. 25 °C cycle performance test

At 25 °C, the lithium-ion battery was charged at a constant current of 0.5 C to 4.35 V, then charged at a constant voltage to a current of 0.05 C, then discharged to 2.8 V at a constant current of 0.5 C, and the discharge capacity was recorded as U1. Afterward, the lithium-ion battery was subjected to an ambient temperature of 25 °C, and the charging and discharging process described above was repeated for 600 times. The discharging capacity of the 600th cycle was recorded as U2.

The capacity retention rate of the lithium-ion battery after 600 cycles at 25 °C is calculated as follows: capacity retention rate = [U2/U1] $\times$ 100%.

3. 60 °C storage performance test

The lithium-ion battery was charged to 4.35 V at 60 °C with a constant current of 0.5 C and then charged at a constant voltage to a current of 0.05 C, at which time the thickness of the lithium-ion battery was tested and recorded as h0. Afterward, the lithium-ion battery was placed in a thermostat at 60 °C, stored for 30 days, and then taken out, at which time the thickness of the lithium-ion battery was tested and recorded as h1. A thickness expansion rate of the lithium-ion battery after 30 days of storage is calculated as follows: thickness expansion rate = [(h1-h0)/h0] $\times$ 100%.

4. Energy density test

The lithium-ion battery was charged at 25°C to 4.3 V at a constant current of 1 A, then charged at a constant voltage until the current was less than 0.5 A. Then the battery was discharged to 2.5 V at a constant current of 1 A, then discharged to 2.5 V at a constant current of 0.5 A, and finally discharged to 2.5 V at a constant current of 0.1 A. The discharge capacity of the battery, C (Ah), was recorded, as well as the voltage value of the battery when the discharge had reached half of the capacity, U (V).

At this point, the battery was weighed and the mass m (kg) was recorded.

Battery energy W = C$\times$U and energy density of the battery = W/m.

The results of the performance tests for each example and comparative example are shown in Tables 1-4 below.

Table 1

| | a | b | a/b | Energy density (Wh/kg) | Capacity retention rate (%) for 600 cycles at 25°C | Expansion rate after 30 days of high-temperature storage at 60°C (%) |
|---|---|---|---|---|---|---|
| Comparative Example 1 | 1.02 | 0 | / | 251 | 77.4 | 16.5 |

(continued)

| | a | b | a/b | Energy density (Wh/kg) | Capacity retention rate (%) for 600 cycles at 25°C | Expansion rate after 30 days of high-temperature storage at 60°C (%) |
|---|---|---|---|---|---|---|
| Comparative Example 2 | 1.02 | 0.5 | 2.04 | 251 | 79.8 | 17.3 |
| Comparative Example 3 | 1.02 | 3.2 | 0.32 | 251 | 82.3 | 25.4 |
| Example 1 | 1.02 | 1 | 1.02 | 251 | 89.3 | 16.3 |
| Example 2 | 1.02 | 0.8 | 1.35 | 251 | 88.1 | 16.1 |
| Example 3 | 1.02 | 1.5 | 0.68 | 251 | 86.7 | 16.5 |
| Example 4 | 1.02 | 1.2 | 0.85 | 251 | 87.1 | 16.3 |
| Example 5 | 1.04 | 0.6 | 1.73 | 249.9 | 88.7 | 17.1 |
| Example 6 | 1.04 | 0.55 | 1.89 | 249.9 | 87.1 | 16.1 |
| Example 7 | 1.04 | 0.5 | 2.08 | 249.9 | 86.4 | 15.8 |
| Example 8 | 0.98 | 2 | 0.49 | 253.9 | 82.4 | 20.3 |
| Example 9 | 0.9 | 4 | 0.23 | 256.8 | 82.6 | 24.1 |

Table 2

| | a | b | a/b | Serial number of thiourea compounds | Energy density (Wh/kg) | Capacity retention rate for 600 cycles at 25°C (%) | Expansion rate after 30 days of high-temperature storage at 60°C (%) |
|---|---|---|---|---|---|---|---|
| Example 10 | 1.02 | 1 | 1.02 | 2 | 251 | 84.9 | 16.1 |
| Example 11 | 1.02 | 1 | 1.02 | 3 | 251 | 84.8 | 16.5 |
| Example 12 | 1.02 | 1 | 1.02 | 4 | 251 | 84.4 | 15.9 |
| Example 13 | 1.02 | 1 | 1.02 | 5 | 251 | 84.7 | 16.4 |

Table 3

| | a | b | a/b | Other additives | Energy density (Wh/kg) | Capacity retention rate (%) for 600 cycles at 25°C | Expansion rate after 30 days of high-temperature storage at 60°C (%) |
|---|---|---|---|---|---|---|---|
| Example 14 | 1.02 | 1 | 1.02 | 1wt%FEC+1wt%$LiNO_3$ | 251 | 90.8 | 15.8 |
| Example 15 | 1.02 | 1 | 1.02 | 1wt%FEC+1wt%$Mg(NO_3)_2$ | 251 | 89.4 | 16.1 |
| Example 16 | 1.02 | 1 | 1.02 | 1wt%VC+1wt%$LiNO_3$ | 251 | 90.4 | 16.2 |

(continued)

| | a | b | a/b | Other additives | Energy density (Wh/kg) | Capacity retention rate (%) for 600 cycles at 25°C | Expansion rate after 30 days of high-temperature storage at 60°C (%) |
|---|---|---|---|---|---|---|---|
| Example 17 | 1.02 | 1 | 1.02 | 2wt% $LiNO_3$ | 251 | 89.9 | 16.5 |

Table 4

| | a | b | a/b | Thickness of the negative electrode film layer (μm) | Energy density (Wh/kg) | Capacity retention rate (%) for 600 cycles at 25°C | Expansion rate after 30 days of high-temperature storage at 60°C (%) |
|---|---|---|---|---|---|---|---|
| Example 18 | 1.02 | 1 | 1.02 | 90 | 251 | 89.9 | 16.1 |
| Example 19 | 1.02 | 1 | 1.02 | 140 | 251 | 88.1 | 16.9 |
| Example 20 | 1.02 | 1 | 1.02 | 150 | 251 | 85.1 | 17.1 |

Both Comparative Examples 1-3 and Examples 1-20 utilize low CB values, and both Examples 1-20 show better cycle performance compared to Comparative Examples 1-3. In addition, the content of thiourea compounds in Comparative Example 2 is relatively low. Therefore, although it improved the cycle performance compared to Comparative Example 1, which contains no thiourea compounds, the improvement is limited. In Comparative Example 3, the content of thiourea compounds is relatively high, leading to significant improvement in cycle performance. However, the expansion rate of the battery after high-temperature storage is too high. As seen from Examples 1-4 and Examples 5-7, when a/b is in the range of 0.8 to 2, especially in the range of 1 to 1.8, the cycle performance of the battery is further improved. Additionally, when a is in the range of 0.9 to less than 1.05, especially in the range of 0.98 to 1.04, the cycle performance of the battery is further enhanced. As a result, the lithium-ion battery can obtain a cycle performance, when b is in the range of 0.5 to 2, in particular 0.5 to 1.0, in which the cycle performance of the battery is further improved.

Examples 10-13 demonstrate that using other thiourea compounds also achieves good cycle performance at low CB values.

Examples 14-17 show that when specific additional additives are added to the electrolyte, the cycle performance of the battery is further improved.

Examples 18-20 indicate that controlling the thickness of the negative electrode film layer to be less than 140 μm can further enhance the cycle performance of the battery.

It should be noted that the present disclosure is not limited to the above-described embodiments. The above embodiments are provided as examples and any embodiments that fall within the scope of the technical idea of the present disclosure and have the same essential features and effects are included within the scope of the present disclosure. Furthermore, various modifications, and other implementations made by combinations of elements from different embodiments that would be apparent to those skilled in the art are also included within the scope of the present disclosure, as long as they do not depart from the spirit and intent of the present disclosure.

## Claims

**1.** A lithium-ion battery, comprising a positive electrode sheet, a negative electrode sheet, a separator, and an electrolyte, wherein
in the battery, a ratio of a negative electrode capacity to a positive electrode capacity is a, and the electrolyte comprises thiourea compounds in an amount of b weight% based on a total weight of the electrolyte, wherein the lithium-ion battery meets a following relationship:

$$a < 1.05;$$

and

$$25 \times (1.05-a) \leq b \leq 100 \times (1.05-a).$$

2. The lithium-ion battery according to claim 1, wherein a/b is in a range of 0.8 to 2, optionally in a range of 1 to 1.8.

3. The lithium-ion battery according to claim 1, wherein a is in a range of 0.9 to less than 1.05, optionally in a range of 0.98 to 1.04.

4. The lithium-ion battery according to claim 1, wherein b is in a range of 0.2 to 5, optionally in a range of 0.5 to 2, and further optionally in a range of 0.5 to 1.0.

5. The lithium-ion battery according to claim 1, wherein the thiourea compounds comprise a following structural formula:

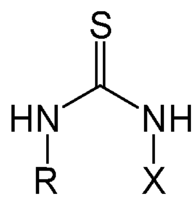,

where R and X are each independently selected from H, an alkyl of C1-C10, an alkenyl of C1-C10, a phenyl, or R and X together represent an alkylene of C1-C10 or an alkenylene of C1-C10, wherein the alkylene of C1-C10 or the alkenylene of C1-C10 is optionally substituted with an oxygroup; optionally, R and X are each independently selected from H, an alkyl of C1-C6, an alkenyl of C1-C6, or R and X together represent an alkylene of C1-C6 or an alkenylene of C1-C6, wherein the alkylene of C1-C6 or the alkenylene of C1-C6 is optionally substituted with an oxygroup.

6. The lithium-ion battery according to claim 1, wherein the electrolyte further comprises an additive selected from at least one of metal nitrates, a fluorinated vinyl carbonate, and a vinylene carbonate; optionally, the metal nitrates is one or more of lithium nitrate, magnesium nitrate, and copper nitrate; and optionally, a content of the additive is in a range of 0.5 weight% to 2 weight%, based on a total mass of the electrolyte.

7. The lithium-ion battery according to claim 1, wherein a thickness of a negative electrode film layer is ≤140 μm within the negative electrode sheet of the lithium-ion battery.

8. A battery module, wherein the battery module comprises the lithium-ion battery according to claim 1.

9. A battery pack, wherein the battery pack comprises the battery module according to claim 8.

10. An electric device, wherein the electric device comprises at least one selected from the lithium-ion battery according to any one of claims 1-7, the battery module according to claim 8, or the battery pack according to claim 9.

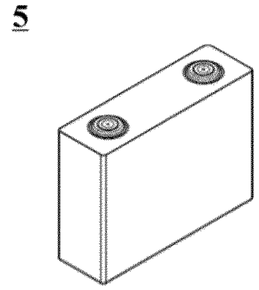


FIG. 1

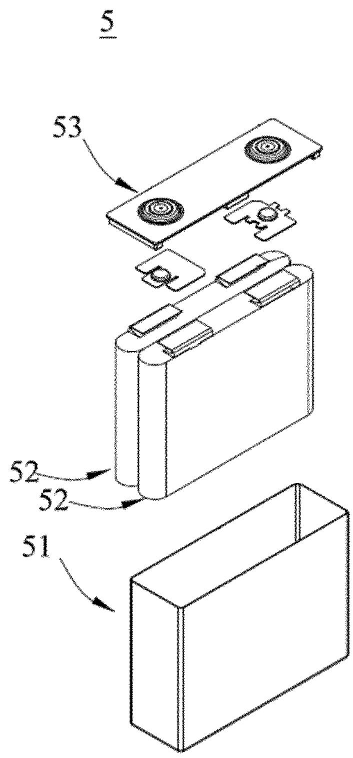


FIG. 2

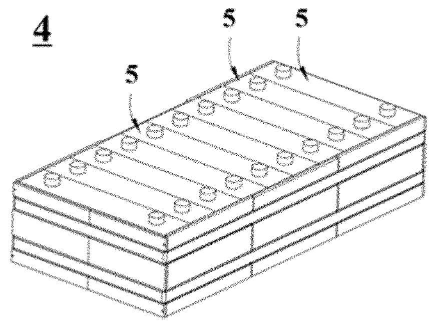


FIG. 3

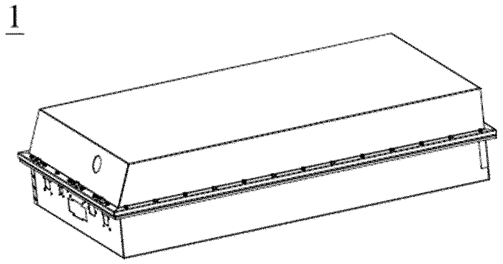


FIG. 4

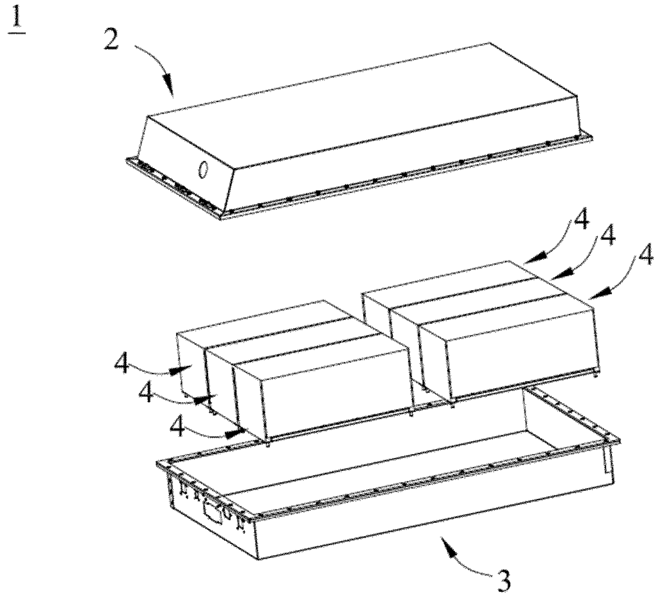


FIG. 5

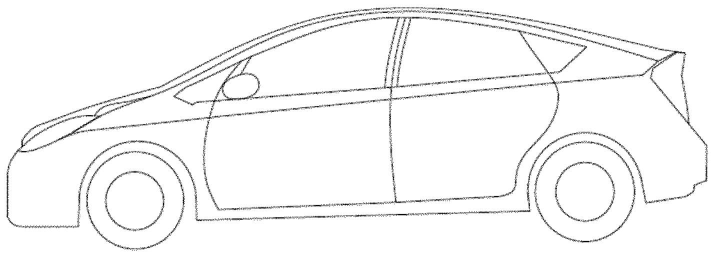

FIG. 6

## INTERNATIONAL SEARCH REPORT

International application No.
**PCT/CN2022/124812**

**A. CLASSIFICATION OF SUBJECT MATTER**

H01M 10/0525(2010.01)i；H01M 10/058(2010.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

WPI, EPODOC, CNPAT, CNKI: 电池, 容量, 锂, 硫脲, 电解液, 电解质, 正极, 负极, 阴极, 阳极, batter+, capacity, lithium, electrolyte, positive, electrode, negative, anode, cathode

**C. DOCUMENTS CONSIDERED TO BE RELEVANT**

| Category* | Citation of document, with indication, where appropriate, of the relevant passages | Relevant to claim No. |
|---|---|---|
| X | CN 112582673 A (BYD CO., LTD.) 30 March 2021 (2021-03-30) description, paragraphs 5-85 | 1, 3-10 |
| X | CN 104733785 A (POSITEC POWER TOOLS (SUZHOU) CO., LTD. et al.) 24 June 2015 (2015-06-24) description, paragraphs 6-120 | 1, 3-10 |
| A | CN 113394456 A (XIAMEN UNIVERSITY) 14 September 2021 (2021-09-14) entire document | 1-10 |
| A | JP 2009266706 A (HITACHI VEHICLE ENERGY LTD.) 12 November 2009 (2009-11-12) entire document | 1-10 |
| A | CN 109273771 A (NINGDE CONTEMPORARY AMPEREX TECHNOLOGY CO., LTD.) 25 January 2019 (2019-01-25) entire document | 1-10 |
| A | CN 105742695 A (SHENZHEN LIWEI LITHIUM ENERGY TECHNOLOGY CO., LTD.) 06 July 2016 (2016-07-06) entire document | 1-10 |

☐ Further documents are listed in the continuation of Box C. ☑ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **19 November 2022** | **28 November 2022** |

Name and mailing address of the ISA/CN

**China National Intellectual Property Administration (ISA/CN)**
**No. 6, Xitucheng Road, Jimenqiao, Haidian District, Beijing 100088, China**

Facsimile No. **(86-10)62019451**

Authorized officer

Telephone No.

Form PCT/ISA/210 (second sheet) (January 2015)

**INTERNATIONAL SEARCH REPORT**
**Information on patent family members**

International application No.
**PCT/CN2022/124812**

| Patent document cited in search report | | | Publication date (day/month/year) | Patent family member(s) | Publication date (day/month/year) |
|---|---|---|---|---|---|
| CN | 112582673 | A | 30 March 2021 | None | |
| CN | 104733785 | A | 24 June 2015 | None | |
| CN | 113394456 | A | 14 September 2021 | None | |
| JP | 2009266706 | A | 12 November 2009 | None | |
| CN | 109273771 | A | 25 January 2019 | None | |
| CN | 105742695 | A | 06 July 2016 | None | |

Form PCT/ISA/210 (patent family annex) (January 2015)